# EUROPÄISCHE PATENTSCHRIFT

(11) **EP 1 833 633 B1**
(45) Veröffentlichungstag und Bekanntmachung des Hinweises auf die Patenterteilung: **31.12.2008**
(21) Anmeldenummer: 05803081.8
(22) Anmeldetag: 15.11.2005
(51) Int. Cl.: B23C 5/10, B23C 5/12

(54) **MESSERKOPF MIT ZWEI MIT IHREN SCHNEIDKANTEN FLUCHTENDEN SCHNEIDPLATTEN FÜR EINE FRÄSVORRICHTUNG**
MILLING HEAD COMPRISING TWO CUTTING PLATES ALIGNED BY THE CUTTING EDGES THEREOF, FOR A MILLING DEVICE
TETE DE FRAISAGE POUR DISPOSITIF DE FRAISAGE POURVUE DE DEUX PLAQUETTES DE COUPE PRESENTANT DES ARETES DE COUPE ALIGNEES

(30) Priorität: 01.12.2004 DE 102004057836
(43) Veröffentlichungstag der Anmeldung: 19.09.2007
(73) Patentinhaber: Profilator GmbH & Co. KG, 42329 Wuppertal (DE)
(72) Erfinder: BUCHHOLZ, Klaus, 42369 Wuppertal (DE)
(74) Vertreter: Grundmann, Dirk
(86) Internationale Anmeldenummer: PCT/EP2005/055977
(87) Internationale Veröffentlichungsnummer: WO 2006/058840

(56) Entgegenhaltungen:
- DE-U1- 7 833 000
- US-A- 4 674 923
- US-A- 4 936 717

## Beschreibung

Die Erfindung betrifft einen Messerkopf für eine Fräsvorrichtung, insbesondere zum Einfräsen von Hinterlegungen in die Flanken der Zähne eines Zahnrades, mit einem Einspannabschnitt zum Einspannen in eine drehantreibbare Werkzeugspindel der Fräsvorrichtung und zwei mit ihren Schneidkanten fluchtend in Achsrichtung des Messerkopfes voneinander beabstandet angeordneten, formschlüssig in einer Halteaussparung gehaltenen Schneidplatten.

Ein derartiger Messerkopf wird von der DE 10127973 A1 beschrieben. Dieser Messerkopf besitzt einen Einspannabschnitt, der in ein entsprechendes Futter einer Werkzeugspindel eingespannt ist. Die Fräsvorrichtung besitzt eine Werkstückspindel, die ebenfalls ein Futter aufweist. Dieses Futter ist in der Lage, ein verzahntes Werkstück, beispielsweise ein Zahnrad zu spannen. Die Achsen von Werkzeugspindel und Werkstückspindel verlaufen parallel zueinander. Werkstückspindel und Werkzeugspindel werden in einem festen Drehzahlverhältnis zueinander angetrieben. Dabei bewegen sich die Schneidkanten der Schneidplatten in Bezug auf das drehangetriebene Werkstück auf einer Zykloide. Die Flugbahnen der Schneidkanten sind so gewählt, dass sie in die Flanken der Zähne des Zahnrades Hinterlegungen einfräsen. Die beiden Schneidplatten liegen in jeweils einer Halteaussparung ein, wo sie mittels Befestigungsschrauben gehalten sind. Die beiden Halteaussparungen liegen in den beiden einander abgewandten Breitseiten eines im Wesentlichen zylinderförmigen Abschnittes des Messerkopfes.

Aus der US 4,936,717 ist ein Messerkopf für eine Fräsvorrichtung bekannt, bei dem in Umfangsrichtung drei Paare, jeweils bestehend aus zwei Schneidplatten, hintereinander angeordnet sind. Die Messerköpfe eines Paares besitzen jeweils Schneidkanten, die in Achsrichtung des Messerkopfes miteinander fluchten und voneinander beabstandet sind. Jede der beiden Schneidplatten liegt in einer ihr zugeordneten Halteaussparung ein. Die beiden Halteausspa-rungen bilden eine gemeinsame Halteaussparung für die beiden Schneidplatten. Mit besonderen Justiermitteln können die beiden Messerköpfe miteinander verbunden werden. Die US 4,936,717 zeigt einen Messerkopf gemäß dem Oberbegriff von Anspruch 1.

Ein ebenfalls aus zwei Kopfteilen bestehender Messerkopf, wobei jeder Kopfteil Schneidplatten trägt, ist aus der US 4,674,923 vorbekannt.

Die DE 78 33 000 U1 beschreibt ein kombiniertes Bohr- und Fräswerkzeug mit einem Messerkopf, welcher eine Mehrzahl von Schneidplatten trägt, wobei jede Schneidplatte in einer ihr individuell zugeordneten Halteaussparung einliegt.

Es ist fertigungstechnisch aufwändig, diese beiden Halteaussparungen so zu fertigen, dass die radial über den Zylinderabschnitt hinausragenden Schneidkanten der in den Halteaussparungen gehaltenen Schneidplatten miteinander fluchten.

Ein Verfahren und eine Vorrichtung zum Erzeugen von Hinterlegungen an Zahnflanken von innen- oder außenverzahnten Werkrädem werden in den Druckschriften EP 1097 018 B1 und der EP 1 106 290 A2 beschrieben.

Der Erfindung liegt die Aufgabe zugrunde, den gattungsgemäßen Messerkopf fertigungstechnisch zu vereinfachen.

Gelöst wird die Aufgabe durch einen Messerkopf gemäß Anspruch 1.

Zufolge dieser Ausgestaltung entfällt der besondere Justieraufwand, der erforderlich ist, um zwei voneinander getrennte Halteaussparungen so zu fertigen, dass ihre jeweiligen Wände miteinander fluchten. Indem lediglich eine Halteaussparung für beide Schneidplatten vorgesehen ist, liegen die Befestigungsflächen der Schneidplatten an ein und derselben Wand der Halteaussparung an. Vorzugsweise besitzt jede Schneidplatte eine sich in Achsrichtung des Messerkopfes sich erstreckende Befestigungsöffnung. Durch diese Befestigungsöffnung greift eine Befestigungsschraube, mit der die Schneidplatte am Messerkopf befestigt ist. Mittels der Befestigungsschraube wird zumindest auf die erste Schneidplatte, die vorzugsweise am Boden der Halteaussparung befestigt ist, eine Spannkraft ausgeübt, die die Schneidplatte gegen einen von Wänden der Halteaussparung gebildeten Winkel presst. Der Boden erstreckt sich dabei in Querrichtung zur Achse des Messerkopfes. Dabei werden die Seitenflanken der vorzugsweise dreieckigen Schneidplatte gegen die Wände der Halteaussparung gepresst. Die Spannkraft kann von einem Konusabschnitt des Kopfes der Befestigungsschraube ausgeübt werden, der sich gegen eine Konusaussparung der Befestigungsöffnung drückt. Die Gewindebohrung, in welche die Befestigungsschraube eingedreht wird, ist dabei um wenige Hundertstel / Zehntel Millimeter hin zum Winkel der Wände der Halteaussparungen versetzt gegenüber der Befestigungsöffnung der lose in der Halteaussparung einliegenden Schneidplatte. In einer bevorzugten Ausgestaltung der Erfindung ist vorgesehen, dass die Schneidplatten unter Belassen eines Freiraumes zwischen sich in ein und derselben Halteaussparung einliegen. Dabei weisen die Köpfe der Befestigungsschrauben aufeinander zu. Die Befestigungsflächen, an denen die beiden Schneidplatten befestigt sind, erstrecken sich quer zur Achsrichtung des Messerkopfes. Ist der Abstand der beiden Befestigungsflächen für die beiden Schneidplatten derart gering, dass in den Freiraum zwischen den beiden Schneidplatten kein Schraubwerkzeug eingesetzt werden kann, so ist vorgesehen, dass die zweite Befestigungsfläche, die dem Boden der Halteaussparung gegenüberliegt, vorzugsweise einem Deckel zugeordnet ist, welcher ein Befestigungselement ausbildet. Dieses Befestigungselement ist lösbar mit dem Messerkopf verbunden. Das Befestigungselement besitzt eine Gewindebohrung, in welche die Befestigungsschraube für die zweite Schneidplatte eingeschraubt werden kann. Bevorzugt besitzt das Befestigungselement eine Hilfsaussparung, deren Wände mit den Wänden der Halteaussparung fluchten. Dabei ist die Wandhöhe der Wände dieser Hilfsaussparung aber geringer als die Materialstärke der Schneidplatte, so dass die Seitenwände der Schneidplatte gegen die Wände der Halteaussparung gepresst werden können. Die zweite Schneidplatte ist vor der Montage des Befestigungselementes am Messerkopf mit diesem fest verbindbar. Auch dies kann mit einer Befestigungsschraube erfolgen, die einen konusförmigen Abschnitt aufweist, der mit einem konusförmigen Abschnitt der Befestigungsöffnung der zweiten Schneidplatte zusammenwirkt, so dass die zweite Schneidplatte gegen die Wände der Hilfsaussparung gedrückt wird. Die Spannkraft, die die zweite Schneidplatte gegen die Wände der Halteaussparung presst, wird von Befestigungsschrauben ausgeübt, mit denen das Befestigungselement am Messerkopf befestigbar ist. Vorzugsweise erstrecken sich diese Befestigungsschrauben auch in Achsrichtung des Messerkopfes und besitzen einen konusförmigen Abschnitt, der mit einem konusförmigen Gegenabschnitt der Befestigungsöffnungen des Befestigungselementes zusammenwirkt, um die erforderliche Spannkraft aufzubringen. In einer Weiterbildung der Erfindung ist vorgesehen, dass zwei segmentförmige Halteaussparungen in diametraler oder spiegelbildlicher Gegenüberlage am Messerkopf angeordnet sind. Es ist aber auch möglich, dass mehr als zwei derartige Halteaussparungen am Messerkopf vorgesehen sind. Jede dieser Halteaussparungen ist mit jeweils zwei Schneidplatten bestückt. Bei eng nebeneinander liegenden Schneidplatten ist zudem vorgesehen, dass jede der Halteaussparungen mit einem eine jeweils zweite Schneidplatte tragenden Befestigungselement verschlossen ist. Besitzt der Messerkopf zwei sich diametral oder spiegelbildlich gegenüberliegende Halteaussparungen, so können die Befestigungselemente halbkreisförmige Grundrisse aufweisen. Im zusammengebauten Zustand sind diese durch eine Diametralfuge voneinander getrennt. Es wird als wesentlich erachtet, dass die Kontur gleichgestalteter, insbesondere mehrkantiger Schneidplatten gegen die Wände einer einzigen Halteaussparung gezogen werden, um sie lagefixiert dort formschlüssig zu haltern.

Nachfolgend wird ein Ausführungsbeispiel der Erfindung anhand der Zeichnungen erläutert. Es zeigt:

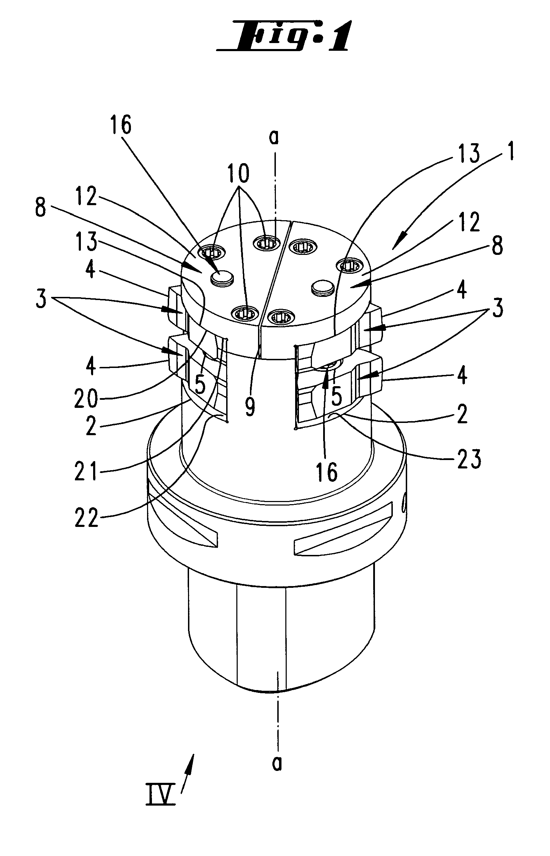

- Fig.1: eine perspektivische Darstellung des Messerkopfes mit zwei parallel übereinanderliegenden Schneidplatten,

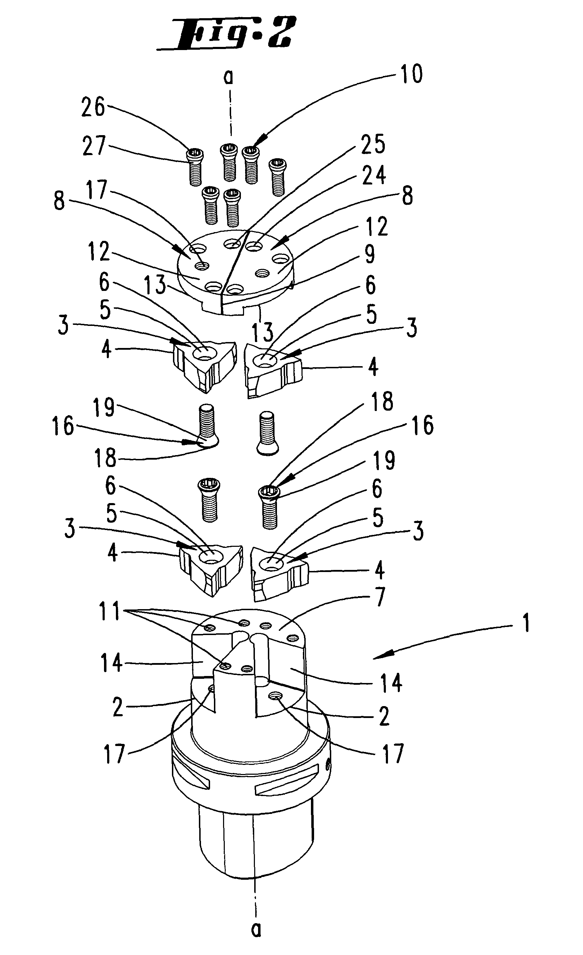

- Fig. 2: eine perspektivische Darstellung des Messerkopfes in einer Explosions-darstellung,
- Fig. 3: eine ähnliche Darstellung wie Fig. 2, jedoch aus einer anderen Blickrichtung,
- Fig. 4: eine Vorderansicht des Messerkopfes gemäß der Blickrichtung IV in Fig. 1,
- Fig. 5: eine Draufsicht gemäß der Blickrichtung V in Fig. 4,

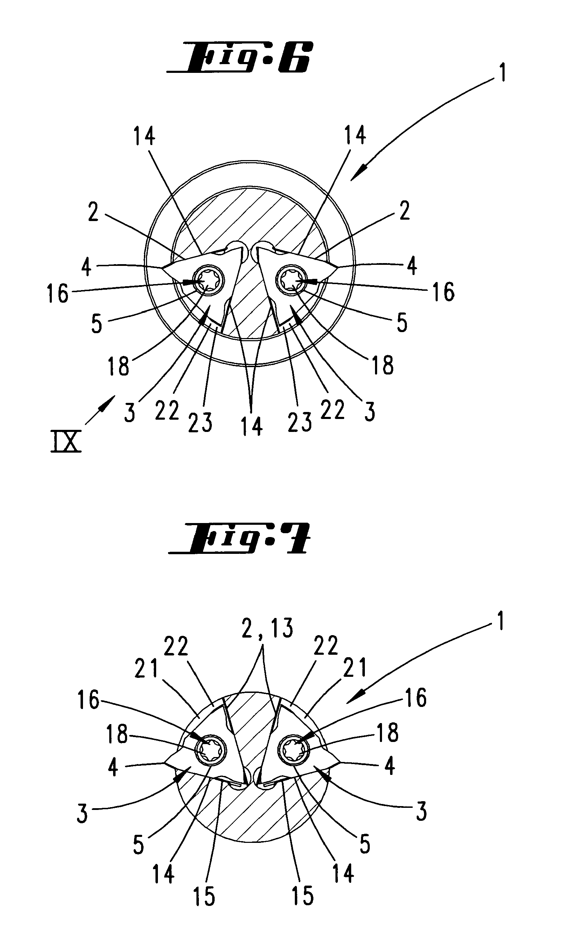

- Fig. 6: einen Schnitt gemäß der Linie VI - VI in Fig. 4,
- Fig. 7: einen Schnitt gemäß der Linie VII - VII in Fig. 4,
- Fig. 8: eine Seitenansicht des Messerkopfes gemäß der Blickrichtung VIII in Fig. 4 und
- Fig. 9: eine Ansicht gemäß der Blickrichtung IX aus Fig. 6.

Der Messerkopf 1 weist zwei Halteaussparungen 2 auf, in denen jeweils zwei parallel übereinander angeordnete Schneidplatten 3 sich befinden. Sie haben eine klappsymmetrische Anordnung. Die Schneidplatten 3 sind derart angeordnet, dass die Schneidkanten 4 in Achsrichtung a des Messerkopfes 1 fluchten.

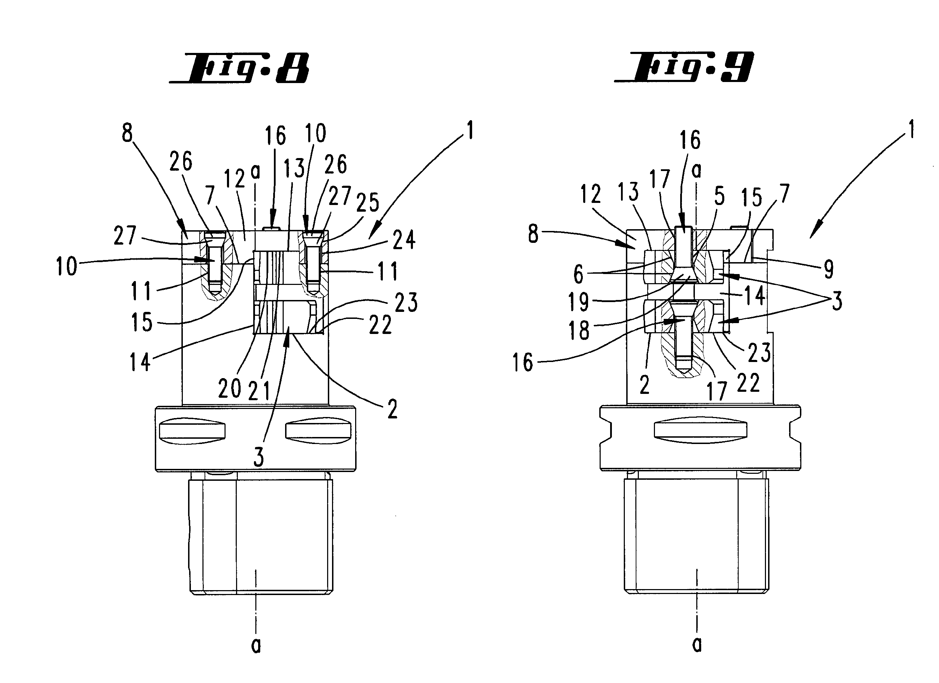

Die Schneidplatten 3 weisen eine Befestigungsöffnung 5 auf, die sich in Achsrichtung a des Messerkopfes 1 erstreckt. Die Befestigungsöffnung 5 besteht im Wesentlichen aus zwei spiegelbildlich angeordneten Konusaussparungen 6. Dies ist in Fig. 9 zu sehen.

An einer Stirnfläche 7 des Messerkopfes 1 sind zwei Befestigungselemente 8 angeordnet. Die Befestigungselemente 8 weisen in etwa einen halbkreisförmigen Grundriss auf. Zwischen den beiden Befestigungselementen 8 verläuft ein Spalt 9. Beide Befestigungselemente 8 sind lösbar mit dem Messerkopf 1 verbunden. Dies wird durch Befestigungsschrauben 10 erreicht. Diese werden in die axial verlaufenden Gewindebohrungen 11, die sich in der Stirnfläche 7 befinden, eingeschraubt.

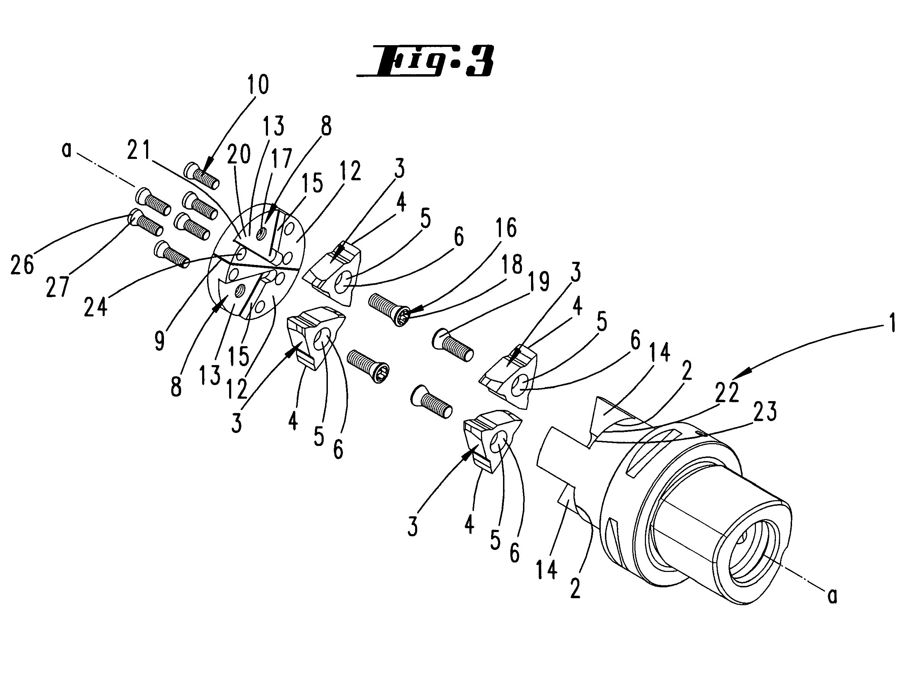

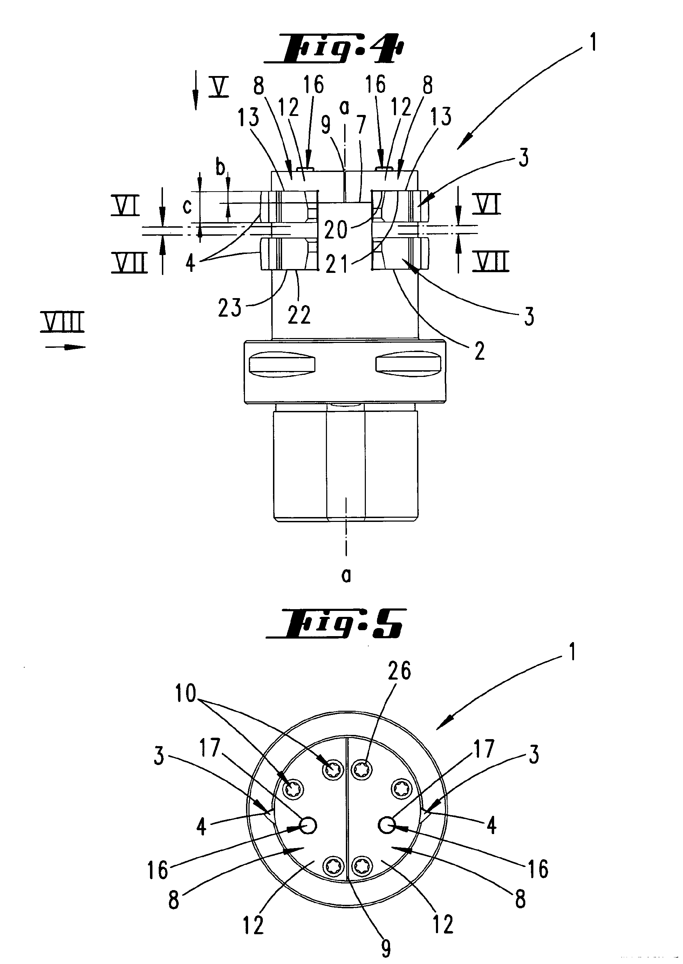

Gleichzeitig bilden die beiden Befestigungselemente 8 den Deckel 12 für die Halteaussparungen 2 aus. In Fig. 3 ist zu sehen, dass das Befestigungselement 8 an der Unterseite eine Hilfsaussparung 13 ausbildet. Diese besitzt die gleiche Form wie die Halteaussparung 2. Die Halteaussparung 2 und die Hilfsaussparung 13 sind ein Segment eines zylindrischen Abschnitts des Messerkopfes 1. Die Wände 14 der Halteaussparung 2 fluchten mit den Wänden 15 der Hilfsaussparungen 13. Die Wände 15 der Hilfsaussparungen 13 weisen eine Wandhöhe b auf, die geringer ist als die Materialstärke c der Schneidplatten 3. Dies ist in Fig. 4 zu sehen.

Die Schneidplatte 3, die am Befestigungselement 8 befestigt wird, wird an einer sich quer zur Achsrichtung a des Messerkopfes 1 erstreckenden Befestigungsfläche 20, die vom Boden 21 der Hilfsaussparung 13 gebildet wird, in ihrer Lage durch eine Befestigungsschraube 16 fixiert. Die Befestigungsschrauben 16 weisen an ihren Köpfen 18 einen Konusabschnitt 19 auf. Dieser ist der Konusaussparung 6 angepasst. Die Befestigungsschraube 16 wird in eine Gewindebohrung 17, die sich im Befestigungselement 8 befindet, eingeschraubt. Durch das Zusammenwirken des Konusabschnitts 19 der Befestigungsschraube 16 mit der Konusaussparung 6 der Schneidplatte 3 wird eine Spannkraft in Richtung Scheitelpunkt des Winkels der Hilfsaussparung 13 ausgeübt. Diese Wirkung kann dadurch verstärkt werden, dass die Gewindebohrung 17 um einige wenige Zehntel oder auch nur Hundertstel zum Mittelpunkt des Messerkopfes 1 hin versetzt wird. Durch den exzentrischen Sitz der Gewindebohrung 17 zur Konusaussparung 6 der Schneidplatten 3 wird die Spannkraft in Richtung des Scheitelpunkts des Winkels der Hilfsaussparung 13 vergrößert. Die anderen Schneidplatten 3 werden ebenfalls, wie zuvor beschrieben, in dem Messerkopf 1 auf eine Befestigungsfläche 22, die vom Boden 23 der Halteaussparung 2 gebildet wird, mit Hilfe einer Befestigungsschraube 16 fixiert. Die Köpfe 18 der Befestigungsschrauben 16 liegen gegenüber. Ebenfalls liegen die beiden Befestigungsflächen 20, 22 auch gegenüber.

Das Befestigungselement 8 weist mehrere Durchgangsbohrungen 24 auf. Im oberen Abschnitt der Durchgangsbohrung 24 ist eine Konusaussparung 25 ausgebildet. Dies ist in Fig. 8 gut zu sehen. Damit gewährleistet ist, dass die Schneidkanten 4 der Schneidplatten 3 miteinander fluchten, werden die Gewindebohrungen 11 um einige Zehntel ggf. auch nur Hundertstel Millimeter exzentrisch in Richtung des Mittelpunktes des Messerkopfes 1 zu den Durchgangsbohrungen 24 angeordnet. Dadurch wird erreicht, dass durch ein Zusammenspiel des Konusabschnittes 27 mit der Konusaussparung 25 eine Spannkraft in Richtung des Scheitelpunkts der winklig angeordneten Wände 14 der Halteaussparung 2 ausgeübt wird.

Durch den exzentrischen Sitz der Gewindebohrungen 17 zu den Befestigungsöffnungen 5 werden die Schneidplatten 3 so in die Halteaussparung 2 eingespannt, dass gewährleistet ist, dass die Schneidkanten 4 mit denen der parallel darüber liegenden Schneidplatten 3 miteinander fluchten. Die beiden Befestigungselemente 8 werden ebenfalls durch den konischen Sitz der Gewindebohrung 11 zu den Durchgangsbohrungen 24 auf den Messerkopf 1 ausgerichtet. Zufolge eines leichten Versatzes zwischen der Bohrung 24, 25 und der zugehörigen Gewindebohrung 11 wird beim Einschrauben der Verbindungsschraube 10 zufolge der Konusanlage eine Zugkraft in Richtung auf die Achse erzeugt, die die Schneidplatten gegen die Wände der Halteaussparung 2 zieht. Da die Lage bei den Befestigungselementen 8 ein wenig variieren kann, befindet sich zwischen den beiden Befestigungselementen 8 ein Spalt 9. Durch diesen Spalt 9 wird die Lage der beiden Befestigungselemente 8 zueinander toleriert.

## Patentansprüche

1. Messerkopf (1) für eine Fräsvorrichtung, insbesondere zum Einfräsen von Hinterlegungen in die Flanken der Zähne eines Zahnrades, mit einem Einspannabschnitt zum Einspannen in eine drehantreibbare Werkzeugspindel der Fräsvorrichtung und zwei mit ihren Schneidkanten (4) fluchtend in Achsrichtung (a) des Messerkopfes (1) voneinander beabstandet angeordneten, formschlüssig in einer Halteaussparung (2) gehaltenen Schneid-platten (3), wobei die beiden Schneidplatten (3) in derselben Halteaussparung (2) einliegen, **dadurch gekennzeichnet, dass** die beiden Schneidplatten (3) gegen dieselben spitzwinklig zueinander angeordneten Wände (14) der Halteaussparung (2) gepresst werden.

2. Messerkopf nach Anspruch 1, **dadurch gekennzeichnet, dass** jede Schneidplatte (3) von einer in Achsrichtung (a) des Messerkopfes (1) sich erstreckenden, eine Befestigungsöffnung (5) der Schneidplatte (3) durchgreifenden Befestigungsschraube (16) gegen die Wände (14) gepresst werden.

3. Messerkopf nach Anspruch 2, **dadurch gekennzeichnet, dass** der Kopf (18) jeder Befestigungsschraube (16) einen Konusabschnitt (19) ausbildet, der mit einer Konusaussparung (6) der Befestigungsöffnung (5) zusammenwirkt und insbesondere eine Spannkraft in Richtung des Winkels ausübt.

4. Messerkopf nach einem der Ansprüche 2 oder 3, **dadurch gekennzeichnet, dass** die Köpfe (18) der Befestigungsschrauben (16) einander gegenüberliegen.

5. Messerkopf nach einem der vorhergehenden Ansprüche, **dadurch gekennzeichnet, dass** eine erste der beiden Schneidplatten (3) an einer sich quer zur Achsrichtung (a) des Messerkopfes (1) sich erstreckenden ersten Befestigungsfläche (22), die von einem Boden (23) der Halteaussparung gebildet ist, befestigt ist.

6. Messerkopf nach Anspruch 5, **dadurch gekennzeichnet, dass** eine zweite der beiden Schneidplatten (3) an einer sich quer zur Achsrichtung (a) des Messerkopfes (1) sich erstreckenden zweiten Befestigungsfläche (20) befestigt ist.

7. Messerkopf nach Anspruch 6, **dadurch gekennzeichnet, dass** die beiden Befestigungsflächen (20, 22) einander gegenüberliegen.

8. Messerkopf nach einem der Ansprüche 6 oder 7, **dadurch gekennzeichnet, dass** die zweite Befestigungsfläche (20) von einem Befestigungselement (8) gebildet ist, welches lösbar mit dem Messerkopf (1) verbunden ist.

9. Messerkopf nach Anspruch 8, **dadurch gekennzeichnet, dass** das Befestigungselement (8) unter Aufbringung der die Schneidplatte (3) gegen den Winkel der Halteaussparung (2) pressenden Spannkraft mit dem Messerkopf (1) verbindbar ist.

10. Messerkopf nach einem der Ansprüche 8 oder 9, **dadurch gekennzeichnet, dass** das Befestigungselement (8) mittels Befestigungsschrauben (10) an einer Stirnfläche (7) des Messerkopfes (1) anschraubbar ist.

11. Messerkopf nach Anspruch 10, **dadurch gekennzeichnet, dass** mindestens eine in eine Gewindebohrung (11) der Stirnfläche (7) eingeschraubte Befestigungsschraube (10) des Befestigungselementes (8) die Spannkraft aufbringt, die die Schneidplatte (3) gegen den Winkel presst.

12. Messerkopf nach einem der vorangehenden Ansprüche, **gekennzeichnet durch** eine vom Befestigungselement (8) ausgebildete Hilfsaussparung (13), deren Wände (15) mit den Wänden (14) der Halteaussparung (2) fluchten, wobei die Wandhöhe (b) der Wände (15) der Hilfsaussparung (13) geringer ist als die Materialstärke (c) der Schneidplatte (3).

13. Messerkopf nach einem der vorangehenden Ansprüche, **gekennzeichnet durch** dreieckige Schneidplatten (3).

14. Messerkopf nach einem der vorangehenden Ansprüche, **gekennzeichnet durch** zwei, sich gegenüberliegend angeordnete Paare von Schneidplatten (3).

15. Messerkopf nach einem der vorangehenden Ansprüche, **dadurch gekennzeichnet, dass** die Halteaussparung (2) ein Segmentausschnitt eines zylindrischen Abschnittes des Messerkopfes (1) ist.

16. Messerkopf nach einem der vorangehenden Ansprüche, **dadurch gekennzeichnet, dass** das Befestigungselement (8) ein die Halteaussparung (2) stirnseitig verschließender Deckel (12) ist.

17. Messerkopf nach einem der vorangehenden Ansprüche, **dadurch gekennzeichnet, dass** das Befestigungselement (8) einen etwa halbkreisförmigen Grundriss aufweist und zwischen zwei Befestigungselementen (8) ein Spalt (9) verläuft.

## Claims

1. Cutter head (1) for a milling device, in particular for cutting undercuts in the flanks of the teeth of a gear, having a mounting section for mounting in a rotatable tool spindle of the milling device, and two cutting plates (3) arranged with their cutting edges (4) aligned and spaced apart from each other in the axial direction (a) of the cutter head (1) and held in form-locking relationship in a holding recess (2), the two cutting plates (3) lying in the same holding recess (2), **characterised in that** the two cutting plates (3) are pressed against the same walls (14) of the holding recess (2) which are at an acute angle to each other.

2. Cutter head according to claim 1, **characterised in that** each cutting plate (3) is pressed against the walls (14) by a fastening screw (16) which extends in the axial direction (a) of the cutter head (1) and passes through a fastening opening (5) in the cutting plate (3).

3. Cutter head according to claim 2, **characterised in that** the head (18) of each fastening screw (16) forms a cone section (19) which cooperates with a conical recess (6) of the fastening opening (5) and in particular exerts a clamping force in the direction of the angle.

4. Cutter head according to either of claims 2 or 3, **characterised in that** the heads (18) of the fastening screws (16) are opposite each other.

5. Cutter head according to any of the preceding claims, **characterised in that** a first one of the two cutting plates (3) is fastened to a first fastening surface (22) which extends transversely to the axial direction (a) of the cutter head (1) and which is formed by a bottom (23) of the holding recess.

6. Cutter head according to claim 5, **characterised in that** a second one of the two cutting plates (3) is fastened to a second fastening surface (20) which extends transversely to the axial direction (a) of the cutter head (1).

7. Cutter head according to claim 6, **characterised in that** the two fastening surfaces (20, 22) are opposite each other.

8. Cutter head according to either of claims 6 or 7, **characterised in that** the second fastening surface (20) is formed by a fastening element (8) which is releasably connected to the cutter head (1).

9. Cutter head according to claim 8, **characterised in that** the fastening element (8) can be connected to the cutter head (1), applying the clamping force which presses the cutting plate (3) against the angle of the holding recess (2).

10. Cutter head according to either of claims 8 or 9, **characterised in that** the fastening element (8) can be screwed by means of fastening screws (10) to an end face (7) of the cutter head (1).

11. Cutter head according to claim 10, **characterised in that** at least one fastening screw (10) of the fastening element (8) which is screwed into a threaded bore (11) in the end face (7) applies the clamping force which presses the cutting plate (3) against the angle.

12. Cutter head according to any of the preceding claims, **characterised by** an auxiliary recess (13) which is formed by the fastening element (8) and of which the walls (15) are in line with the walls (14) of the holding recess (2), the wall height (b) of the walls (15) of the auxiliary recess (13) being less than the material thickness (c) of the cutting plate (3).

13. Cutter head according to any of the preceding claims, **characterised by** triangular cutting plates (3).

14. Cutter head according to any of the preceding claims, **characterised by** two pairs of cutting plates (3) opposite each other.

15. Cutter head according to any of the preceding claims, **characterised in that** the holding recess (2) is a segment cut-out of a cylindrical section of the cutter head (1).

16. Cutter head according to any of the preceding claims, **characterised in that** the fastening element (8) is a cover (12) which closes the holding recess (2) at the end face.

17. Cutter head according to any of the preceding claims, **characterised in that** the fastening element (8) has an approximately semicircular contour and a gap (9) runs between two fastening elements (8).

## Revendications

1. Tête de fraisage (1) destinée à un dispositif de fraisage, en particulier pour former par fraisage des dégagements dans les flancs des dents d'une roue dentée comprenant une section de serrage pour serrer dans une broche porte-outil susceptible d'être entraînée en rotation du dispositif de fraisage, ainsi que deux plaquettes de coupe (3) disposées à distance l'une de l'autre avec leurs arêtes de coupe (4) alignées dans le sens de l'axe (a) de la tête de fraisage (1), ces plaquettes étant maintenues par liaison de forme dans un évidement de maintien (2), les deux plaquettes de coupe (3) étant placées dans le même évidement de maintien (2), **caractérisée en ce que** les deux plaquettes de coupe (3) sont plaquée contre des parois (14), disposées selon un angle aigu l'une par rapport à l'autre, de l'évidement de maintien (2).

2. Tête de fraisage selon la revendication 1, **caractérisée en ce que** chaque plaquette de coupe (3) est plaquée contre les parois (14) par une vis de fixation (16) s'étendant dans le sens de l'axe (a) de la tête de fraisage (1) et traversant une ouverture de fixation (5) de la plaquette de coupe (3).

3. Tête de fraisage selon la revendication 2, **caractérisée en ce que** la tête (18) de chaque vis de fixation (16) forme une section conique (19) qui coopère avec un évidement de forme conique (6) de l'ouverture de fixation (5) et en particulier exerce une force de serrage dans la direction de l'angle.

4. Tête de fraisage selon l'une des revendications 2 ou 3, **caractérisée en ce que** les têtes (18) des vis de fixation (16) sont disposées l'une opposée à l'autre.

5. Tête de fraisage selon l'une des revendications précédentes, **caractérisée en ce que** une première parmi les deux plaquettes de coupe (3) est fixée sur une première surface de fixation (22) s'étendant transversalement par rapport à la direction axiale (a) de la tête de fraisage (1) et formée par un fond (23) de l'évidement de maintien.

6. Tête de fraisage selon la revendication 5, **caractérisée en ce qu'**une deuxième parmi les deux plaquettes de coupe (3) est fixée sur une deuxième surface de fixation (20) s'étendant transversalement par rapport à la direction axiale (a) de la tête de fraisage (1).

7. Tête de fraisage selon la revendication 6, **caractérisée en ce que** les deux surfaces de fixation (20, 22) sont disposées l'une à l'opposée de l'autre.

8. Tête de fraisage selon l'une des revendications 6 ou 7, **caractérisée en ce que** la deuxième surface de fixation (20) est formée d'un élément de fixation (8) qui est relié de façon détachable à la tête de fraisage (1).

9. Tête de fraisage selon la revendication 8, **caractérisée en ce que** l'élément de fixation (8) est susceptible d'être relié à la tête de fraisage (1) par une force de serrage qui pousse la plaquette de coupe (3) contre l'angle de l'évidement de maintien (2).

10. Tête de fraisage selon l'une des revendications 8 ou 9, **caractérisée en ce que** l'élément de fixation (8) est susceptible d'être vissé au moyen de vis de fixation (10) sur une face frontale (7) de la tête de fraisage (1).

11. Tête de fraisage selon la revendication 10, **caractérisée en ce qu'**au moins une vis de fixation (10) de l'élément de fixation (8) qui est vissée dans un alésage fileté (11) de la face frontale (7) établit la force de serrage qui pousse la plaquette de coupe (3) contre l'angle.

12. Tête de fraisage selon l'une des revendications précédentes, **caractérisée par** un évidement auxiliaire (13) formé par l'élément de fixation (8) dont les parois (15) sont alignées avec les parois (14) de l'évidement de maintien (2), la hauteur de paroi (b) des parois (15) de l'évidement auxiliaire (13) étant inférieure à l'épaisseur du matériau (c) de la plaquette de coupe (3).

13. Tête de fraisage selon l'une des revendications précédentes, **caractérisée par** des plaquettes de coupe (3) de forme triangulaire.

14. Tête de fraisage selon l'une des revendications précédentes, **caractérisée par** deux paires de plaquettes de coupe (3) disposées de manière opposée.

15. Tête de fraisage selon l'une des revendications précédentes, **caractérisée en ce que** l'évidement de maintien (2) est sous forme d'un segment découpé dans une partie cylindrique de la tête de fraisage (1).

16. Tête de fraisage selon l'une des revendications précédentes, **caractérisée en ce que** l'élément de fixation (8) est un couvercle (12) qui renferme l'évidement de maintien (2) à son côté frontal.

17. Tête de fraisage selon l'une des revendications précédentes, **caractérisée en ce que** l'élément de fixation (8) comprend un plan de forme approximativement semi-circulaire et entre deux éléments de fixation (8) il existe un intervalle (9).
